(19) Europäisches Patentamt
European Patent Office
Office européen des brevets

(11) Publication number: 0 091 637
B1

(12) # EUROPEAN PATENT SPECIFICATION

(45) Date of publication of patent specification: 12.12.90

(51) Int. Cl.$^5$: G 02 F 1/137, G 02 F 1/133

(21) Application number: 83103302.2

(22) Date of filing: 05.04.83

(54) Liquid crystal display.

(30) Priority: 05.04.82 JP 55376/82

(43) Date of publication of application:
19.10.83 Bulletin 83/42

(45) Publication of the grant of the patent:
12.12.90 Bulletin 90/50

(84) Designated Contracting States:
CH DE FR GB LI NL SE

(56) References cited:
EP-A-0 032 362
GB-A-1 569 516
MOLECULAR CRYSTALS & LIQUID CRYSTALS, vol. 53, no. 3/4, 1979, pages 167-179, Gordon and Breach Science Publishers, London, GB; G. PELZL et al.: "Tilt angle determination of a smectic C phase by field-induced Freedericksz transition and X ray investigations"
JAPANESE JOURNAL OF APPLIED PHYSICS, vol. 18, supplement 18-1, 1979, pages 427-433, Tokyo, JP; K. YOSHINO et al.: "New electro-optical effects in ferroelectric liquid crystals"
JEE, vol. 17, no. 167, February 1980, pages

(73) Proprietor: Hitachi, Ltd.
5-1, Marunouchi 1-chome
Chiyoda-ku, Tokyo 100 (JP)

(72) Inventor: Isogai, Masato
3-17-2-406, Moriyama-cho
Hitachi-shi Ibaraki-ken (JP)
Inventor: Iwasaki, Kishiro
1288, Kamesaku-cho
Hitachiohta-shi Ibaraki-ken (JP)
Inventor: Nakano, Fumio
2374-110, Ohkubo-cho
Hitachi-shi Ibaraki-ken (JP)

(74) Representative: Patentanwälte Beetz sen. - Beetz jun. Timpe - Siegfried - Schmitt-Fumian
Steinsdorfstrasse 10
D-8000 München 22 (DE)

(56) References cited:
44-47, Tokyo, JP; T. TESHIMA et al.: "New color LCDs open up new fields of application"

EP 0 091 637 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a liquid crystal display which makes use of a ferroelectric liquid crystal and is most suitable for color displays.

Liquid crystal displays using a ferroelectric liquid crystal have been reported to solve the problem of low speed response of liquid crystal displays (EP—A—32362) but no report has yet been made how to improve the low speed reponse for color displays. A predetermined hue cannot be obtained using the above prior art.

It will now be assumed that the refractive index is $n_e$ for the light oscillating parallel to the ferroelectric liquid crystal molecules, and the refractive index is $n_o$ for the light oscillating perpendicular thereto, and that both light components are incident on to the substrate on the side of a light source with the same phase. It is known, however, that the wavelength becomes longer for the light oscillating parallel to the liquid crystal molecules and becomes shorter for the light oscillating perpendicular because of the difference $\Delta n$ occurring between $n_e$ and $n_o$. For this reason, a phase difference $\Delta n \cdot d/\lambda_o$ occurs for each component of the light coming out from the substrate on the side of an observer with d representing the thickness of the liquid crystal layer and $\lambda_o$ representing the wavelength of the light in vacuum. This phenomenon is referred to as "birefringence". The value of $\Delta n$ is determined by the liquid crystal composition and $\lambda_o$ of the light source. Thus, the phase difference depends upon d. When d changes, the display color of the liquid crystal changes. In addition, the hue changes with the angle of view. In practice, d changes from product to product and even in the same product. It is thus difficult to obtain a stable predetermined hue with liquid crystal displays using ordinary ferroelectric liquid crystals according to the prior art.

"Japanese J. of Appl. Phys." 18 (1979) pages 427—433 discloses a liquid crystal display of the type specified in the preamble to claim 1 of the present invention, wherein the liquid crystal layer consists of a ferroelectric liquid crystal of 25 to 35 μm thickness. The display operation is carried out through switching between scattering state and aligned state of the ferroelelectric liquid crystal molecules in the cell by non-application and application of an electric field of unspecified polarity over a predetermined threshold value.

On the other hand, "Molecular crystals & liquid crystals", Vol 53, No. 3/4 (1979), pages 167—169, discloses that 0.8 wt.% of a specific dichroic dye molecules dissolved in a liquid crystal in the smectic C phase are reoriented together with the liquid crystal molecules in the smectic C phase. Said document, however, does not mention any ferroelectric liquid crystal.

It is therefore an object of the present invention to develop a liquid crystal display having both high speed response and color uniformity.

The term "color uniformity" herein means (1) that a predetermined display color does not vary from product to product; (2) a predetermined display color portion appears uniform within one product; and (3) the display color does not change with the viewing angle.

This object is achieved according to the claims. The dependent claims refer to preferred embodiments. Thus, the display mode of the present invention is based on the guest-host effect of the liquid crystal, or, in other words, makes use of the absorption characteristics of the dichroic or pleochroic dye added to the ferroelectric liquid crystal.

In the present invention, the liquid crystal layer may be not only a single layer but also two or more layers. For the visual observation, at least one substrate must be transparent. If the liquid crystal layer consists of two or more layers, various arrangements may be employed.

Examples therefor are as follows:

(1) An arrangement in which the long axis of the liquid crystal molecules in one layer crosses substantially at right angles the long axis of the liquid crystal molecules of another or one of the other layers when an electric field is applied.

(2) An arrangement in which the angle between the long axis of the liquid crystal molecules in one layer and the long axis of the liquid crystal molecules of another or one of the other layers is substantially zero or substantially 1.80 degrees when an electric field is applied.

(3) An arrangement in which the axis of absorption of the dye molecules in one layer coincides substantially with that of the dye molecules in another or one of the other layers in the first stage and crosses the latter substantially at right angles in the second state.

Means for applying an electric field are additionally provided on the substrates in the same way as in conventional liquid crystal displays and they are generally composed of transparent electrodes, a power source and the corresponding connections. Seal members are disposed between the substrates so as to encompass the liquid crystal layer. An adhesive is generally employed.

The electrodes may consist of an electrode layer for exciting the liquid crystal layer as a whole and an electrode layer for exciting only predetermined portions thereof. In this case, an insulating film is preferably interposed between both electrode layers. A pattern may be formed on one surface of each substrate so that both positive and negative voltages can be simultaneously applied.

The ferroelectric liquid crystal to be used in the present invention is preferably a liquid crystal exhibiting either a chiral smectic C phase or a chiral smectic H phase. These smectic liquid crystals have a laminar structure which is inherent to the smectic liquid crystals in general; moreover, the direction of the long axis of the liquid crystal molecules changes from layer to layer, and their molecular orientation is such

that helices having their helical axes in the direction perpendicular to the layers are formed. It is believed that this helical structure exhibits the ferroelectricity. The liquid crystal molecules are arranged with a certain angle of inclination relative to the helical axis. The material that exhibits the ferroelectricity responds as a ferroelectric to a d.c. field, reverses the direction of spontaneous polarization in accordance with the direction of the field and rearranges, as is known from ferroelectric liquid crystals. In this case of the smectic liquid crystals, the liquid crystal molecules rearrange in such a manner that the direction of the long axis of the molecules is perpendicular to the direction of the field and at an angle, which is inherent to the material, with respect to the helical axis before excitation (the angle of inclination between the helical axis and the long axis of the molecules; this angle will hereinafter be called "θ"). The direction of θ reverses in accordance with the direction of the field. θ of now available ferroelectric liquid crystals is from 20 to 30°, and theoretically $\theta = \pi/4$ is most preferable for displays based on the guest-host effect. Though the degree of the spontaneous polarization $P_s$ of the ferroelectric liquid crystal to be used in the present invention is generally at least 1 $nC/cm^2$, it may be below this value if the elastic constant is small.

The following Schiff base type liquid crystals are examples of chiral smectic liquid crystals which may be used in the present invention:

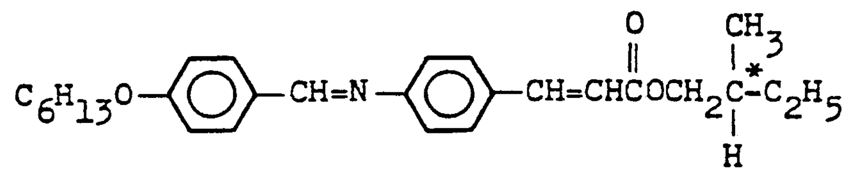

p-hexyloxybenzylidene-p'-amino-2-methylbutyl-cinnamate (HOBAMBC)

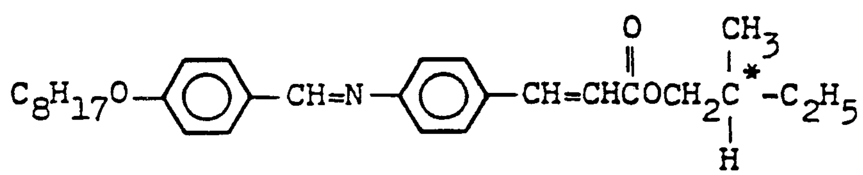

p-octyloxybenzylidene-p'-amino-2-methylbutyl-cinnamate (COBAMBC)

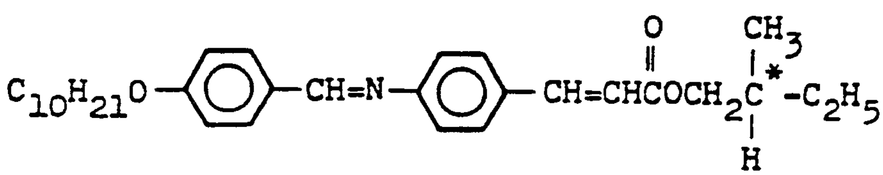

p-decyloxybenzylidene-p'-amino-2-methylbutyl-cinnamate (DOBAMBC)

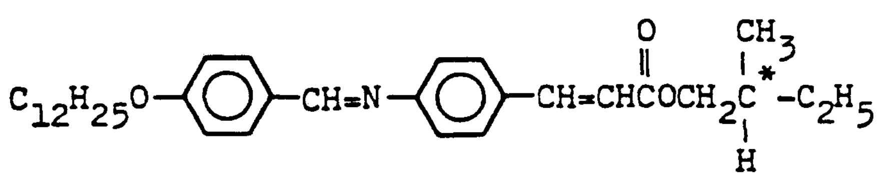

p-dodecyloxybenzylidene-p'-amino-2-methylbutyl-cinnamate (DDOBANBC)

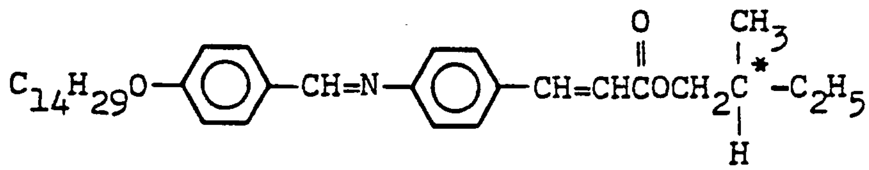

p-tetradecyloxybenzylidene-p'-amino-2-methylbutyl-cinnamate (TDOBAMBC).

The ferroelectric liquid crystal used in the embodiment of the present invention, wherein the thickness of the liquid crystal layer is set to the distance in which the molecules of the ferroelectric liquid crystal can form the helix, forms the helical structure under the non-excited state. In this case, it is preferred that its helical axis is directed (changed in a single domain) in substantially parallel with each substrate and in a substantially predetermined direction. According to the arrangement, the ferroelectric rearrangement can generate a large optical change, and can provide an optical modulation element having large modulation and suitable for use in various fields of applications. In order to align the direction of the helical axes in a predetermined direction over a certain area, or to form the single domain, treatment of disposing an orientation control film may be applied to the surface of the substrate which comes into contact with the liquid crystal.

As a result of experiments, the inventors of the present invention have confirmed that several conventional methods that are used for controlling the orientation of the nematic and cholesteric liquid crystals can also be applied to the formation of the single domain in parallel with the substrates in the present invention. The most suitable method of forming the single domain uses a polyamide type polymer film such as a polyamide isoindoloquinazolindione film that has been subjected to the rubbing treatment. An SiO oblique vacuum deposition film is also effective. It is preferred that the directions of the helical axes directed by the two substrates are substantially parallel to each other. Other orientation means include a method which applies mechanical shear and a method which gradually cools the liquid crystal from an isotropic liquid while a magnetic field is applied.

The ferroelectric liquid crystal materials illustrated previously all have the spontaneous polarization in the direction perpendicular to the long axis of the liquid crystal molecules so that when the electric field acts upon them, the direction of the long axis of the liquid crystal molecules becomes perpendicular to the direction of the field. Accordingly, the displacement of the liquid crystal molecules that is caused by arranging the helical axis in parallel with the substrates and applying the field so as to cross the liquid crystal may be brought forth by only changing the direction of the long axis of the molecules within the same plane. Hence, the liquid crystal display can operate at a low voltage and can respond at a high speed.

The pleochroic dyes to be used in the present invention may be those which are used for the electrical-optical effect referred to as the "guest-host effect" in the conventional nematic and cholesteric liquid crystals. Examples of such dyes include anthraquinone derivatives, azo derivatives, diazo derivatives, merocyanine derivatives, tetrazine derivatives, quinophthaline derivatives, azomethine derivatives, perynone derivatives, perylene derivatives, and so forth. They may be used either alone or in combination. The amount of addition of the dye is preferably from 2 to 6% by mass.

In the present invention, it is preferred that a polarizer is fitted to at least one of the substrates (exclusive of a color polarizer unless specified otherwise). In this case, it is preferred that the angle between the helical axis directed by the one substrate or the other substrate and the axis of polarization of the polarizer is substantially equal to the angle between the long axis of the liquid crystal molecules and the helical axis.

The substrate to be used in the present invention may be either a glass substrate or a plastic substrate. The substrate itself may be a polarizer, a color polarizer or a color filter. If a polarizer is used, the polarizer itself may be a liquid crystal element having a ferroelectric liquid crystal layer. Such a polarizer consists of two second transparent substrates equipped with transparent electrodes, respectively, and arranged so as to oppose the transparent electrodes with each other, a layer consisting of a ferroelectric liquid crystal composition arranged in such a manner that the long axis of the molecules is substantially parallel to the second transparent substrates and in a predetermined direction, and incorporating therein a pleochroic dye and means for applying an electric field in a direction perpendicular to the long axis of the molecules.

In the present invention, the liquid crystal layer is preferably from 4 µm to 20 µm thick in order to easily fabricate the device and also to obtain excellent display characteristics.

In the present invention, the following methods may be employed so as to furnish the substrate with the color polarizer function. Incidentally, the mere term "polarizer" does not comprise the "color polarizer".

(1) The color polarizer is fitted to at least one of the substrates.

(2) At least one of the substrates itself is the color polarizer.

(3) At least one of the substrates itself is the polarizer and the color filter is additionally fitted.

(4) The polarizer and the color filter are additionally fitted to at least one of the substrates.

(5) At least one of the substrates itself is the polarizer or is equipped with the polarizer, and the other

substrate itself is the color filter or is equipped with the color filter.

The liquid crystal molecules of the pleochroic ferroelectric liquid crystal composition are arranged substantially parallel to the surface of the substrates and the direction of the molecules is changed over within the same plane (plane substantially parallel to the surface of the substrate) depending upon the application of an electric field. This is a behaviour pecular to the ferroelectric liquid crystal molecules. On the other hand, the color polarizer has the axis of polarization (the axis of absorption of light) and this is in parallel with or in the same plane as the surface of the substrate in the present invention. Accordingly, predetermined display colors can be obtained when the direction of the molecular axis (the axis of absorption of light) and the direction of the axis of polarization of the color polarizer coincide. In other words, since the phase difference $\Delta n \cdot d/\lambda_0$ described previously does not determine the display colors, the nonuniformity of color can be eliminated.

If the color polarization is used, only the light of the specific wavelength is absorbed whereas the other light passes without being absorbed in the case of a vertical Nicol. In the case of a parallel Nicol, all the colors pass. Accordingly, if the vertical Nicol is then employed, the specific light other than the absorbed light passes. This transmitted light is selected by the liquid crystal layer or the light selected by the liquid crystal layer is further selected by this color polarizer so that the display colors are determined. Incidentally, if the wavelength range (absorption spectrum) of the color polarizer overlaps with the wavelength range (absorption spectrum) of the liquid crystal layer in the visible range, the display colors in this range become more sharper and the contrast becomes higher. Unless the color polarizer is used, the selectivity of the light becomes inferior.

Several kinds of additional plates such as the color polarizer and the like may be fitted to the substrate. They need not cover the entire surface of the substrate but may be disposed at a necessary predetermined portion or portions. The substrate having the color polarizer function to be used in the present invention is a polarizer whose transmissivity $T_{//}$ (transmissivity of light whose oscillating direction is parallel to the substrate or in the case of the parallel Nicol) or whose tansmissivity $T\perp$ (transmissivity of the light whose oscillating direction is perpendicular to the substrate or in the case of the vertical Nicol) tends to change with a specific wavelength $\lambda$. In other words, it is a member which has the changeover function of transmitting the light of specific wavelengths or absorbing the same. If the hue of the color polarizer is in agreement with the hue of the liquid crystal composition, the contrast becomes maximal.

A substrate having the polarizer (exclusive of the color polarizer; hereinafter the same) function may be disposed so as to oppose a substrate having the color polarizer function. In this case, the substrate itself may be a polarizer or a polarizer may be additionally fitted to the substrate. The polarizer and the color polarizer are arranged such that the axis of polarization of the polarizer, and the axis of polarization of the color polarizer (axis of absorption of light) are substantially in agreement with the long axis of the molecule (or the axis of absorption of light) under the application of an electric field of a predetermined direction. In this instance, after the light is polarized by the polarizer, specific wavelength components of the light inherent to the liquid crystal are absorbed by the liquid crystal layer and substantially the same wavelength components of the light are absorbed by the color polarizer. In other words, the light that is finally transmitted is more sharply colored due to the color polarizer. When the direction of the electric field is reversed, the long axis of molecular axis, or the axis of absorption of light greatly deviates from the axis of polarization of the polarizer so that the quantity of light absorbed by the liquid crystal drops. Further, since the light that has transmitted through the liquid crystal is generally incident to the color polarizer as the elliptically polarized light, the quantity of light absorbed by the color polarizer also drops. Accordingly, the most of the incident light eventually transmits and the contrast is remarkably improved because the drop of the quantity of the transmitted light due to the disposition of the color polarizer above is negligible. The polarizer may be the color polarizer. If the hue of the color polarizers is the same, the viewing angle becomes wide, and the contrast is further improved. According to the experiments, it is preferred that the axis of polarization of the polarizer and the axis of polarization of the color polarizer are arranged to be a little deviated from the direction of the axis of absorption of light of the liquid crystal layer.

The other substrate itself, that opposes the substrate having the color polarizer function, may be a color filter or a substrate equipped with the color filter.

However, the substrate and the additional plate(s) have to be disposed so as not to offset the color polarization function of the present invention explained above.

The liquid crystal display in accordance with the present invention is useful not only for electro-optical displays but also for electro-optical converters for optical communication, switching devices in optical circuits, and so forth. In accordance with the present invention, a color liquid crystal display is developed having high speed response and wherein nonuniformity of color is eliminated.

Hereinafter, preferred embodiments of the present invention will be described with reference to the accompanying drawings.

Figures 1, 7, 10, 12, 15, 17, 19 and 21 are schematic views of the liquid crystal displays in accordance with the embodiments of the present invention;

Figures 2, 11 and 13 are diagrams for explaining the influence of the applied electric field upon the liquid crystal layer in the embodiments shown in Figures 1, 10 and 12, respectively;

Figure 3 is a sectional view of the liquid crystal display for the comparative example of the present invention;

Figure 4 is a diagram for explaining the influence of the applied electric field upon the liquid crystal layer of the comparative example shown in Figure 3;

Figures 5 and 6 are electro-optical characteristic diagrams of the embodiment shown in Figure 1;

Figures 8 and 9 are pattern diagrams of the embodiment shown in Figure 7;

Figure 14 is a diagram showing the transmission characteristics each of the ordinary polarizer, the color polarizer and the color filter alone with respect to wavelength;

Figures 16, 18, 20 and 22 are diagrams showing the transmission characteristics with respect to wavelength of the liquid crystal displays in accordance with the embodiments of the present invention; and

Figures 23 and 24 are diagrams showing the transmission characteristics with respect to wavelength of the liquid crystal displays of the comparative examples for the present invention.

In the embodiments of the invention that follow, the liquid crystal layer is an example of a single layer transmission type, but the present invention is not limited thereto. Hence, the liquid crystal layer of the reflection type may also be a liquid crystal display of the invention in accordance with the principle thereof. Although the following examples of the present invention, exclusive of Examples 1 through 4, use the upper and lower substrates to each of which an additional plate or plates (a polarizer, a color polarizer or a color filter; hereinafter referred to as "additional plates") is fitted, the substrates *per se* may be the additional plates as described previously. Furthermore, only one additional plate is shown disposed for each substrate in these examples, but the amount of additional plates may be three or more and in such a case the effect thereof is also to be attributed to the present invention. However, the smaller the number of additional plates, the brighter becomes the display, the number of production steps and the thickness of the device are reduced. The term "polarizer" will hereinafter denote the ordinary polarizer exclusive of the "color polarizer" unless specified otherwise.

Example 1

Figure 1 is a schematic view of the liquid crystal display in accordance with one embodiment of the present invention.

The liquid crystal layer 1 consists of a guest-host type liquid crystal composition which uses a ferroelectric liquid crystal as host liquid crystal and includes a dichroic dye dissolved in the host liquid crystal. The liquid crystal layer 1 is interposed between two transparent substrates 2. Both substrates 2 are substantially parallel to each other. A transparent electrode 3 is disposed on the inner side of each substrate 2 (on the side of the liquid crystal layer 1) and an orientation control film 4 covers the electrode 3 from thereon. The liquid crystal layer 1 is sealed around the substrate 2 by an adhesive layer 5. A lead wire 6 extends from the periphery of each of the upper and lower electrodes 3 outside the liquid crystal display and is electrically connected to a power source 7. A polarizer 8 is disposed on the external side of one of the substrates 2 (on the viewing side). This embodiment is of the transmission type and is equipped with a light source 9. In this embodiment, the incident light $I_o$ enters the display from the reverse thereof, and the transmitted light I emerges from the surfaces of the display (on the viewing side).

According to the construction described above, the helical axes of the ferroelectric liquid crystal coincide substantially with the preferential direction of the substrate (the rubbing direction if the orientation control film 4 is a rubbing film). Figure 2 is a diagram for explaining the behaviour of each molecular (liquid crystal molecule 10 of the ferroelectric liquid crystal and the dye molecule 11) in response to the application of an electric field when the liquid crystal layer 1 of the liquid crystal display of the present invention is particularly taken into consideration. When an electric field E is applied to the liquid crystal layer 1 through the electrodes 3, the long axes of molecules are arranged in the state (A) or in the state (B) in accordance with the direction of field E. It will be assumed that the direction of the axis of polarization 81 of the polarizer 8 is brought into conformity with the direction of the long axis of molecule 101 of the liquid crystal molecular 10 in the state (A); the intensity I of the transmitted light in each of states (A) and (B) is given by the following equations:

$$\text{State (A): } I = \frac{I_o}{2} \exp(-a_{//}(\lambda)\cdot d) \qquad (1)$$

$$\text{State (B): } I = \frac{I_o}{2} \{\sin^2 2\theta \cdot \exp(-a_{\perp}(\lambda)\cdot d) + \cos^2 2\theta \cdot \exp(-a_{//}(\lambda)\cdot d)\} \qquad (2),$$

where $I_o$ is the intensity of the incident light; $a_{//}(\lambda)$ and $a_{\perp}(\lambda)$ are the absorption coefficients of the liquid crystal composition containing the dichroic dye, with respect to the light whose oscillating direction is parallel to the direction of the long axis of molecule 101 when the wavelength is $\lambda$, and the absorption coefficient with respect to the light whose oscillating direction is perpendicular to the direction 101, rspectively; d is the thickness of the liquid crystal layer, and $\theta$ is the angle between the direction of the helical axis 12 and the direction 101 of the long axis of the molecules, as shown in the drawing.

Since $a_{//}(\lambda)$ and $a_{\perp}(\lambda)$ are generally determined by the kind of the dichroic dye, the hue does not depend upon the thickness of the liquid crystal layer as may be seen from the above equations.

In contrast to the display mode using the birefringence (which will be dealt with in Comparative Example 1 explaining a comparative example) for the present embodiment of the invention, it is not necessary to take into account variances of the thickness of the liquid crystal layer. Further, the display mode utlizing the birefringence involves the problem that the hue varies depending upon the angle of view, whereas the display mode of the present invention does not have a problem like this and the displays have a wide angle of viewing field. When a material having $\theta = \pi/4$ (45°) is used as the ferroelectric liquid crystal, the display contrast becomes maximal as shown in equation (2). The response time is essentially determined by the time necessary for changing the orientation of the ferroelectric liquid crystal molecule 10 and the dye molecule 11. Hence, the display of this example has high speed response comparable to that utilising the same ferroelectric liquid crystal and the display mode of birefringence.

Next, the method of producing the liquid crystal display of this example and the characteristics of the product obtained thereby will be described in detail.

An electrically conductive film (ITO film) of an indium oxide-tin oxide type (ITO) is deposited on one surface of each glass substrate 2 having a size of 30 × 40 × 3 mm. The film is etched in a predetermined pattern to form a transparent electrode 3. A polyimide isoindoloquinazoline dion (PIQ) film as one of the polyimide type polymer materials is formed on the surface of each substrate 2 on which the electrode is then formed. The surface is rubbed in a predetermined direction using gauze or buffing cloth. The film is formed by rotary-coating a 3,5% NMP (N-methyl-2-pyrrolidone) solution of PIQ using a spinner rotating at a speed of about 3500 $min^{-1}$ and baking the film at 250°C for one hour. The resulting film is about 800 Å thick. Thus, an orientation control film 4 is formed on each substrate 2.

Next, using a glass fiber having a diameter of 8 µm as a spacer, the liquid crystal cell is assembled so that the rubbing directions of the two substrates 2 become parallel to each other. The periphery of the substrates 2 is saled simultaneously with the assembly. The liquid crystal composition is then vacuum-sealed within the cell. The liquid crystal composition is prepared by mixing 3% of mass of dichroic dye 1,4-diamino-2-(p-n-butylphenoxycarbonyl)anthraquinone as the guest component with p-decyloxybenzylidene-p'-amino-2-methylbutyl-cinnamate (DOBAMBC) as the host liquid crystal. After the liquid crystal composition is sealed, the composition is heated to an isotropic liquid temperature and is then gradually cooled down to the temperature of the chiral smectic C phase, at which ferroelectricity is exhibited, at a rate of approximate 0,5°C/min. In this manner, a liquid crystal element is obtained having uniformly aligned helical axes.

The liquid crystal element thus obtained is disposed as shown in Figure 1 to provide the liquid crystal display. The electro-optical characteristics of this display are measured under the following conditions. The light source is monocolor light having a wavelength of 625 nm approximate to the maximum absorption wavelength of the dye, the polarizer 8 is set so that the angle between the axis of polarization and the helical axis is 23°, and the measuring temperature is 75°C.

Figure 5 is a diagram showing the relation between the intensity I of the transmitted light and the applied voltage. Curve i represents the characteristics of the liquid crystal display obtained in the manner described above, and curve ii represents those of a display not having the orientation control film (with the rest being the same as the former) as a comparative example. As may be seen clearly from the diagram, the intensity of the transmitted light of this example changes to saturation at a voltage of approximately 5 V. The intensity ratio of the transmitted light at the time of application of the 5 V voltage to the application of the −5 V voltage (contrast ratio) is about 2. When the liquid crystal display is observed under white light, the element is seen colored blue at the time of application of the −5 V voltage and is seen colorless when the direction of the electric field is reversed.

Figure 6 shows the change with time of the intensity I of the transmitted light when a square wave of 15 V and 50 Hz is applied. The change of the intensity I finishes at about 1 ms and it is understood that the liquid crystal display responds at high speed.

## Comparative Example 1

Figure 3 is a schematic view of the liquid crystal display as a comparative example to Example 1 of this invention.

This comparative example illustrates the display mode utilizing the birefringence as mentioned in connection with Example 1. The structural differences of this comparative example from Example 1 consist in that the thickness of the liquid crystal layer is sufficiently reduced so as to unwind the helical structure, that the polarizer 8 is disposed outside each substrate 2, and that the axes of polarization of the polarizers 8 cross one another at right angles.

The construction described above provides the following two kinds of stable states, i.e., the state (C) and the state (D), as shown in Figure 4. The state (C) and (D) change from one to the other depending upon the electrical field applied to the liquid crystal layer 1. When, for example, an electric field pulse in the order of micro-seconds (approximately $10^5$ V/cm) is applied, the state (C) changes to the state (D) and vice versa with a response time in the order of micro-seconds. The liquid crystal layer 1 assuming the state (C) or (D) is interposed between the two polarizers 8 via the substrates 2, and the direction of the axis of polarization 81 of one polarizer 8 is allowed to cross that 82 of the other. If one of the axes of polarization 81 coincides with the direction 101 of the long axis of the liquid crystal molecules 10 under the state (C), then the intensity I of

the light transmitted through birefringence, when the light having the intensity $I_o$ is incident, is expressed by the following equation:

$$\text{State (C) } I = O \quad (3)$$

$$\text{State (D): } I = \frac{I_o}{2} \cdot \sin^2 4\theta \cdot \sin^2(\pi \cdot \frac{\Delta n \cdot d}{\lambda}) \quad (4),$$

where $\Delta n$ is the refractive anisotropy of the ferroelectric liquid crystal, with the rest of the symbols having the same meaning as those of the formulas (1) and (2).

As is obvious from equations (3) and (4), the intensity I of the transmitted light in the display mode utilizing the birefringence depends upon the wavelength of the incident light. Accordingly, the state (D) appears colored and, moreover, the hue depends upon the thickness of the liquid crystal layer. To realize the display, wherein nonuniformity of color is eliminated, a liquid crystal element having uniform thickness has to be produced which is difficult to realize industrially. In order to produce liquid crystal displays all having the same specification, techniques are necessary limiting the variance of the thickness of the liquid crystal layers to such an extent that the hue does not change from product to product.

Example 2

The characterizing feature of this example consists in that an electrode layer for exciting the liquid crystal layer was a whole and another electrode layer for exciting only a predetermined portion of the liquid crystal layer are disposed on each of the two transparent substrates, whereby the remaining details of the construction as well as the production method are the same as those used in Example 1.

Figure 7 is a schematic view of the liquid crystal display of this example. A transparent electrode 31 for exciting the liquid crystal layer as a whole is first disposed inside each transparent electrode 2, and an insulating film 41 is disposed on the electrode 31. Furthermore, a transparent electrode 32 having a predetermined pattern is formed on the film 41, and an orientation control film 42 is disposed on the electrode 32. The insulating film 41 serves also as an orientation control film.

In accordance with this example, the pattern can be displayed in the following manner. First, a d.c. voltage having a predetermined polarity (positive, for example) is applied to electrode 31 to generate a uniform background. This state is sometimes permanently memorized, but it is necessary from time to time to continue the excitation within a suitable time interval. Next, a d.c. voltage having a polarity opposite to the above voltage (negative, for example) is applied to electrode 32 which is the partial electrode disposed on the film and which has said pattern as to mate with the pattern to be displayed in accordance with the input signal, so that the state different from the background is realized, and the pattern is displayed. If, for example, the background is made transparent, the display is effected such as shown in Figure 9, and if the background is in the light absorbing state, the display is effected such as shown in Figure 8.

As described above, this example provides the effect that the pattern of Figures 8 and 9 can be displayed by selecting the polarity of the voltage to be applied. Thus, this example provides a novel display system which easily controls the background.

Example 3

This example is characterized in that three transparent electrode substrates are used, and liquid crystal layers consisting of the ferroelectric liquid crystal composition exhibiting the same hue are interposed between the substrates. The remaining details of construction as well as the production method are the same as those used in Example 1.

The liquid crystal layers 1A, 1B consisting of the chiral smectic liquid crystal exhibiting ferroelectricity and the dichroic dye have the helical structure as shown in Figure 10 with the directions of the helical axes being substantially in parallel to the surfaces of the substrates. Though the helical axe 13A, 13B are shown in Figure 10, as to extend in the same direction, it is generally not necessary for them to coincide with each other. It is, however of importance that the directions of the helical axes are substantially uniform in each layer.

The liquid crystal layers 1A, 1B are interposed between the transparent electrodes 3A, 3B, 3C and 3D disposed on the substrates 2A, 2B and 2C. The electrodes 3A, 3B, and 3C, 3D are connected to an external power source, and an external electric field is independently applied to the liquid crystal layer 1A and 1B. These electrodes 3A—3D are covered with orientation control films 4A—4D, respectively.

The operation upon the application of the electric field will be explained in this example with reference to Figure 11 which is a schematic view showing the direction of the helical axes of each layer and the orientation direction of the long axes of the liquid crystal molecules at the time of application of the field.

Thereby, the angle between the direction 12A of the helical axes of the first layer and the direction 12B of the second layer is defined as $\varphi$, the angles between the directions 101A, 101B of the long axis of the liquid crystal molecules and the helical axis are defined as $+\theta$ and $-\theta$ when electric fields of opposing directions are applied to the first liquid crystal layer, and the angles between the directions 101C, 101D of the long axis of the liquid crystal molecules and the helical axis are defined as $+\theta'$ and $-\theta'$, when electric

fields of opposing directions are applied to the second liquid crystal layer. As to make the explanation easier, it will be assumed that the first and second layers consist of a liquid crystal material having the same composition, whereby $|\theta| = |\theta'|$. It will be easily understood that the explanation applies to the general condition. Incidentally, the dichroic dye is selected so as to have the property of strongly absorbing light whose oscillating direction is parallel to the long axis of the liquid crystal molecules.

Now, when the positive electric field and the negative electric field are simultaneously applied to the first and second layers, respectively, the directions of the long axis of the liquid crystal molecules become 101B and 101D, respectively, and the angle θ defined by these orientation directions ae $\varphi + 2\theta$ which may be seen from Figure 11. On the other hand, if the negative and positive electric fields are simultaneously applied to the first and second layers, respectively, the directions of the long axes of the liquid crystal molecules becomes 101B and 101C, respectively, and the angle θ' between them becomes $\varphi - 2\theta$. If these two angles θ and θ' meet a certain condition, the light transmission changes remarkably, and optical modulation becomes possible. The most ideal condition is the case where $\theta = 90°$ and $\theta' = 0°$. According to the principle described above, the absorption by the dye becomes maximal, and the display has the darkest appearance when $\theta = 90°$. When $\theta' = 0°$, the absorption by the dye becomes minimal, and the display has the brightest appearance. Accordingly, the maximum contrast ratio is obtained under the conditions described above. The realization of an ideal condition like this is limited to the case in which $\theta = 22{,}5°$ and $\varphi = 45°$ as may be seen from the explanation described above. θ is a value inherent to the liquid crystal material and is believed to vary from material to material. If this value slightly deviates from the ideal condition, some contrivances are necessary, and the contrast ratio drops unavoidably. However, a practically suitable optical modulation element is obtained, if θ is within the range of 20 to 30°. In this case, the angle φ can be determined in accordance with the application. If, for example, the dark state is minimized, the arrangement is made so that θ becomes 90°. To make the bright condition maximal, θ' may be 0°.

Though this example deals with the case of switching the two dark and bright states, the four states from bright to dark are realized by the same element by using materials having different angles θ for the first and second layers and by suitably setting the angle φ.

Example 4

Figure 2 is a schematic view of the liquid crystal display of Example 4 of this invention.

The liquid crystal layer 1 consists of a guest-host type liquid crystal composition consisting of a ferroelectric liquid crystal, i.e., p-decyloxybenzylidene-p'-amino-2-methylbutyl-cinnamate (DOABMBC) as the host liquid crystal, and 3% by mass of a blue type dichroic dye, i.e., 1,4-diamino-2-2-(p-n-butylphenoxy-carbonyl)-anthraquinone dissolved in the host liquid crystal. The liquid crystal layer 1 is interposed between two transparent glass substrates 2. Each substrate 2 has a size of 30 × 40 × 3 mm. Both substrates are arranged in parallel with each other while interposing a glass fiber spacer having a diameter of 8 µm between them. An indium oxide type transparent electrode 3 is disposed on the inner side of each substrate 2 (on the side of the liquid crystal layer 1), and an orientation control film 4 covers the electrode 3. The electrode 3 is etched in a predetermined pattern. The orientation control film 4 conists of polyimide isoindoloquinazoline dion (PIQ) and is rubbed with gauze or buffing cloth. The orientation control film 4 is about 800 Å thick. The liquid crystal layer 1 is sealed by an adhesive layer 5 along the periphery of the substrate 2. Lead wires 6 are extending outside the device from the periphery of the upper and lower electrodes 3 and are connected to a power source 7. A color polarizer 14 is disposed outside one of the substrates 2 (on the viewing side). "No. CB-18", a product of Sanritsu, is used as color polarizer 14. This example is of the transmission type and is equipped with a light source 9. In this example having the construction described above, the incident light $I_0$ comes from the reverse side of the device, and the transmitted light I emerges from the front side of the device (on the viewing side).

The liquid crystal display is produced in the following manner. First, the electrodes and the orientation control films 4 are formed on the two substrates 2 which are assembled so that the rubbing directions are parallel and oppose each other. Incidentally, the orientation control film 4 is formed by rotary-coating a 3,5% NMP (N-methyl-2-pyrrolidone) solution of PIQ using a spinner rotating at a speed of about 3500 $min^{-1}$ and baking the film at 250°C for one hour. Next, the peripheral portions are sealed by the adhesive layer 5. The liquid crystal composition is then vacuum-sealed. After saling, the cell is heated to an isotropic liquid. While a square wave voltage of 50 V to 50 Hz is being applied, the cell is gradually cooled down to the temperature of the chiral smectic C phase at a rate of about 0,5°C/min. In this manner, a liquid crystal display having uniformly aligned helical axes is obtained. Incidentally, the axis of absorption of light of the liquid crystal layer 1 (that is, the direction of the long axis of molecules) in the state of the application of the electric field is brought into conformity with the axis of absorption of the color polarizer 14. (Slight deviation is permissible and sometimes preferable).

In accordance with the construction described above, the bulk of helical axes of the ferroelectric liquid crystal substantially coincide with the preferential direction of the substrates (the direction of rubbing, if the orientation control film 4 is a rubbing film). Figure 13 is a schematic view useful for explaining the behaviour of each molecule (ferroelectric liquid crystal molecule 10 and dye molecule 11) in response to the application of the electric field, particularly when the liquid crystal layer 1 of the liquid crystal display of this example is taken into consideration. When the electric field E is applied to the liquid crystal layer 1 through

the electrodes 3, the direction of the long axes of the liquid crystal molecules assumes the state (A) or the state (B) in accordance with the direction of the field E. In the corresponding example, the axis of polarization 141 of the color polarizer 14 is aligned with the direction 101 of the long axis of the liquid crystal molecules 10 in the state (A). According to this arrangement, the intensity I of the transmitted light in the state (A) and the state (B) is expresed by the following equations:

$$\text{State (A): } I = \frac{I_o}{2} \exp(-a_{//}(\lambda)\cdot d) \qquad (1)$$

$$\text{State (B): } I = \frac{I_o}{2} \{\sin^2 2\theta \cdot \exp(-a\perp(\lambda)\cdot d) + \cos^2 2\theta \cdot \exp(-a_{//}(\lambda)\cdot d)\} \qquad (2),$$

where $I_o$ is the intensity of the incident light, $a_{//}$ and $a\perp$ are the absorption coefficients of the liquid crystal composition containing the dichroic dye with respect to the light whose frequency is $\lambda$ and whose oscillating direction is parallel to the direction 101 of the long axis of molecule and perpendicular to the direction 101, respectively, d is the thickness of the liquid crystal layer, and $\theta$ is the angle between the direction 12 of the helical axis and the direction 101 of the long axis of the molecules, as shown in the drawing.

$a_{//}(\lambda)$ and $a\perp(\lambda)$ are generally determined by the kind of the dichroic dye so that the hue does not depend upon the thickness of the liquid crystal layer as may be seen from the above equations. In comparison with the display mode utilizing the birefringence, it is therefore not necessary to take the variances in thickness of the liquid crystal layer into account. The display mode utilizing the birefringence involves the problem that the hue varies with the viewing angle, whereas the display mode of this example, which employs the guest-host effect, is free from such problem and provides a display having a wider viewing angle. As illustrated in equation (2), the display contrast becomes maximal if a material having $\theta = \pi/4$ (45°) is used. The response time is essentially determined by the time necessary for changing the orientation of the ferroelectric liquid crystal molecule 10 and that of the dye molecule 11. Hence, the device of this example has high speed response as compared with that utilizing the same ferroelectric liquid crystal and the display mode of birefringence. In this example, the response time is approximately 1 ms when the applied voltage is 10 V.

The light having a wavelength inherent to the liquid crystal is absorbed by the liquid crystal layer 1, and the light having substantially the same wavelength components is also absorbed by the color polarizer 14. Since the hue of the color polarizer 14 is brought into conformity with that of the liquid crystal layer 1, the wavelength of the light absorbed by the color polarizer 14 becomes substantially equal to that of the light absorbed by the liquid crystal layer 1. In other words, the light that is finally transmitted is more sharply colored because of the color polarizer 14. Here, the direction of the electric field applied to the liquid crystal layer is reversed. In this case, the orientation of the long axes of molecules of the liquid crystal layer 1 changes as shown in Figure 13 so that the axis of absorption of light (i.e., the direction 101 of the long axis of molecules) distinctly deviates from the axis of polarization of the color polarizer 14. Since the light transmitted through the liquid crystal layer 1 incident on the color polarizer 14 is generally elliptically polarized light, the quantity of light absorbed by the color polarizer 14 drops. Accordingly, most incident light is eventually transmitted and the drop in the quantity of light transmitted because of the color polarizer 14 is negligible. Hence, the contrast is considerably improved.

When measurement is made using light of a wavelength of 625 nm the intensity of the transmitted light is 1,3 (arbitrary units) for the liquid crystal display having the color polarizer 14 at the time of application of a −10 V voltage, and 6,5 (arbitrary units) when measurement is made at the time of application of a +10 V voltage, the contrast ratio being 5,0.

Figure 14 illustrates the relation between the transmittances $T_{//}$, $T\perp$ and the wavelength $\lambda$ for the color polarizer 14, the conventional polarizer 8 (not the color polarizer) and the color filter. In the diagram, symbols (a), (b) and (c) represent the conventional polarizer 8, the color polarizer 14 and the color filter, respectively. The abscissa represents the wavelength $\lambda$, and the ordinate represents the transmittance T. The curves ii, iii and iv represents $T_{//}$, and the curves v, vi and vii represent $T\perp$. As will be understood from the diagram, the conventional polarizer 8 does not absorb light of any wavelength, but permits transmission of any color in the case of $T_{//}$, and in the case of $T\perp$, it absorbs the light of all wavelengths so that the display becomes absolutely dark. In other words, in the case the conventional polarizer 8 is used, the display color is solely determined by $T_{//}$, and light of the specific wavelength is not selected. If, however, the color polarizer 14 is used, the light of a certain specific wavelength is absorbed in the case of $T\perp$, so that the transmitted light is selected. However, both $T\perp$ and $T_{//}$ exhibit the same tendency in the case the color filter is used, so that the display color is not changed. (In other words, no clear distinction can be made between $T\perp$ and $T_{//}$). Needless to say that the switching of $T_{//}$ and $T\perp$ is effected by the application of the electric field (on-off or application of positive and negative voltages) to the ferroelectric liquid crystal molecules.

Example 5

The structural difference of this example from Example 4 is that the conventional polarizer 8 is disposed on the substrate 2 on the side of the light source 9. According to this arrangement, the incident light $I_o$ is first polarized by the polarizer 8 and then passes to the liquid crystal layer 1, and the selected light emerges from the color polarizer 14. If the direction of the electric field is reversed in this instance, the axis of absorption of light of the liquid crystal layer will distinctly deviate from the axis of polarization of the polarizer 8 and that of the color polarizer 14, so that the quantity of light absorbed by the liquid crystal layer 1 drops, and almost all the light emerges from the color polarizer 14. In other words, the contrast is further improved because of the existence of the polarizer 8. Incidentally, "HN-38", a product of Polaroid Corp., is used as polarizer 8.

Fig. 16 is a diagram showing the transmission characteristics when the axis of polarization of the color polarizer 14 is parallel to that of the polarizer 8 (Fig. 16a) and when the former is perpendicular to the latter (Fig. 16b). In Figure 16(a), the curve viii represents the product of $T_{//}$ of the polarizer 8 (see Figure 14(a)); hereinafter called "$T_{//}$(P)") and $T_{//}$ of the color polarizer 14 (see Figure 14(b)); hereinafter called "$T_{//}$(CP)"), and the curve ix represents the product of $T\perp$ of the polarizer 8 (see Figure 14(a)); hereinafter called "$T\perp$(P)") and $T\perp$ of the color polarizer 14 (see Figure 14(b)); hereinafter called "$T\perp$(CP)"). In Figure 16(b), on the other hand, the transmission curve x represents the product of $T_{//}$(P) and the transmission curve xi represents the product of $T_{//}$(CP) and $T\perp$(P). In either case, selectivity of light is achieved, and the effect of the present invention is accomplished.

Example 6

In this example, the color polarizer 14 is disposed outside each substrate 2 as shown in Figure 17, with the remaining being the same as in Example 5. Figure 18 shows a transmission characteristic diagram when the axes of polarization of the two polarizers 14 are in parallel (Figure 18(a), and when they are perpendicular (Figure 18(b)). Regarding Figure 18(b) it should be mentioned that it is not preferred, if the color polarizers 14 have exactly the same transmittance-wavelength characteristic. In Figure 18(a), the curve xii represents the product $T_{//}$(CP) x $T_{//}$(CP), and the curve xiii represents the product $T\perp$(CP) x $T\perp$(CP). In Figure 18(b), the curves xiv and xv represents the product $T\perp$(CP) x $T_{//}$(CP), but since the peaks of the wavelengths exhibiting the minimum transmittances are slightly different, selectivity of light is achieved.

Example 7

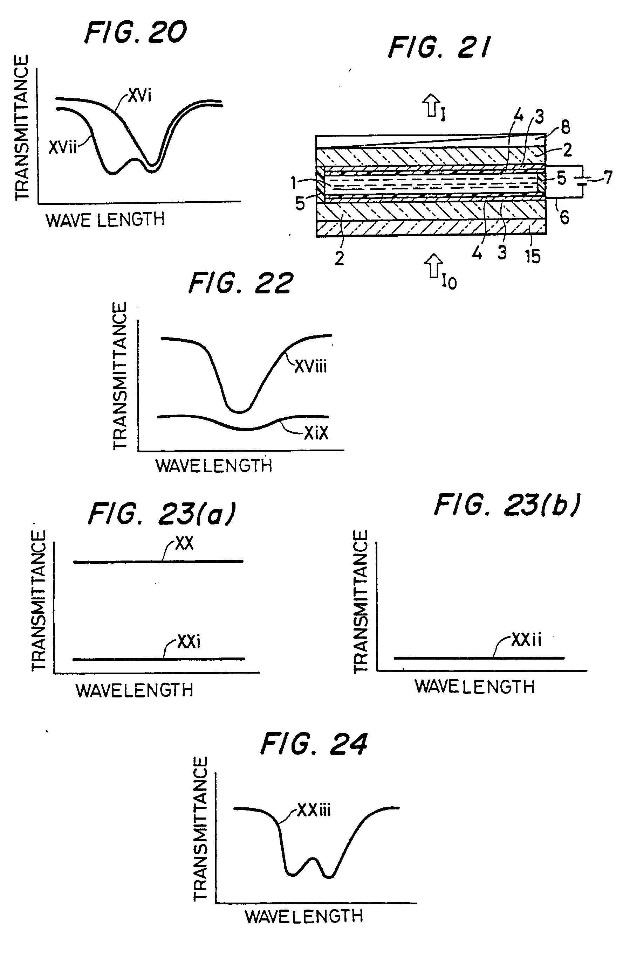

In this example, the color polarizer 14 is disposed outside only one substrate 2, as shown in Figure 19, and a color filter 15 is disposed outside the other substrate 2. The remaining construction is the same as in Example 5. Figure 20 shows the transmission characteristic diagram of this example. Since the color filter 15 has no axis of polarization, the transmittance-wavelength characteristics are 'paired'. The curve xvi represents the product $T_{//}$(CP) x T(CF), (for T(CF), see Figure 14(c) which shows the transmittance of the color filter 15), and the curve xvii represents $T\perp$(CP) x T(CF).

Example 8

This example uses the conventional polarizer 8 instead of the color polarizer 14 of Example 7 as shown in Figure 21 with the remaining construction being the same as in Example 7. Figure 22 is a transmission characteristic diagram. The curve xviii represents the product $T_{//}$(P) x T(CF), and the curve xix represents the product $T\perp$(P) x T(CF). As is obvious from the diagram, the function of the color polarizer 14 is obtained by a combination of the conventional polarizer 8 and the color filter 15.

Comparative Example 2

This comparative example has the same construction as the comparative Example 1 shown in Figure 3 with the exception that it has a thickness sufficient to obtain the helical structure inside the liquid crystal layer with a dye being included in the ferroelectric liquid crystal as a guest. In other words, the conventional polarizers 8 are disposed outside the substrates 2. Figure 23 is a transmission characteristic diagram when the axes of polarization of the two polarizers 8 are in parallel (Figure 23(a)), and when they are perpendicular (Figure 23(b)). In Figure 23(a), the curve xx represents the product $T_{//}$(P) x $T_{//}$(P), and the curve xxi represents the product $T\perp$(P) x $T\perp$(P). This arrangement is substantially the same as when only one polarizer is used. In Figure 23(b), on the other hand, the curve xxii represents the product $T_{//}$(P) x $T\perp$(P), where a display guest-host effect display mode becomes impossible, since it becomes absolutely dark.

Comparative Example 3

In this example, color filters 15 are disposed outside the two substrates 2 but neither the polarizers 8 nor the color polarizers 14 are used. Figure 24 is a transmission characteristic diagram. Even when the color filters 15 having mutually different absorption ranges are used, the transmission characteristics of this example are expressed by a single curve xxiii, because the color filter does not have the function of distinguishing $T_{//}$ and $T\perp$ from the beginning. In other words, a display switching function is not obtained in this example.

**Claims**

1. Liquid crystal display including a liquid crystal layer, a plurality of substrates which are disposed so as to sandwich the liquid crystal layer at least one of which is provided with a polarizer and at least one of which is transparent, electric field application means provided at the substrates for applying an electric field to the liquid crystal layer and a sealing member provided between the substrates in such a manner as to encompass the periphery of the liquid crystal layer, the liquid crystal layer (1) comprising a ferroelectric liquid crystal, the thickness of the liquid crystal layer (1) being such that the molecules of the ferroelectric liquid crystal can form helices, the helical axes of the ferroelectric liquid crystal being oriented substantially parallel to each of the substrates (2), characterized in that the liquid crystal layer consists of a liquid crystal composition comprising the ferroelectric liquid crystal as a host material, and a pleochroic dye, as a guest material, that the surfaces of the substrates are treated so that the helical axes of the ferroelectric liquid crystal are oriented in one predetermined direction over the whole display area, that the electric field is a reversible D.C. field, and that the at least one polarizer is a neutral polarizer (8) or a color polarizer (4).

2. The liquid crystal display according to claim 1, wherein the orientation of the helical axes of the liquid crystal material is effected by an orientation control film (4).

3. The liquid crystal display according to claim 2, wherein the orientation control film (4) is a film made of a polyimide type polymer material.

4. The liquid crystal display according to one of claims 1 to 3, wherein the angle between the direction of the helical axis of the ferroelectric liquid crystal and the direction of the axis of polarization of the neutral polarizer (8) or the color polarizer (14) is substantially equal to the angle between the direction of the long axis of the molecules of the ferroelectric liquid crystal and the direction of the helical axis.

5. The liquid crystal display according to one of claims 1 to 4, wherein the liquid crystal layer has a thickness of 4 to 20 μm.

6. The liquid crystal display according to one of claims 1 to 5, wherein the electric field application means are electrodes, each of them consisting of an electrode layer for exciting the liquid crystal layer (1) as a whole and an electrode layer for exciting only a predetermined portion thereof.

7. The liquid crystal display according to claim 6, wherein an insulating film (41) is interposed between the electrode layer exciting the liquid crystal layer (1) as a whole and the electrode layer exciting only a predetermined portion of the liquid crystal layer (1).

8. The liquid crystal display according to one of claims 1 to 7, wherein at least two liquid crystal layers are interposed between the transparent substrates.

9. The liquid crystal display according to claim 8, wherein the angle between the direction of the long axis of the molecules (10) of the ferroelectric liquid crystal and the helical axis is from ±20° to ±30°.

10. The liquid crystal display according to claim 9, wherein the liquid crystal layers are designed such that when an electric field is applied, the direction of the long axis of the liquid crystal molecules in one of the layers is substantially perpendicular to the direction of the long axis of the liquid crystal molecules of anyone of the other liquid crystal layers.

11. The liquid crystal display according to claim 9, wherein the liquid crystal layers are designed such that when an electric field is applied, the direction of the long axis of the liquid crystal molecules in one of the layers forms an angle of substantially 0° or substantially 180° with the direction of the long axis of the liquid crystal molecules in anyone of the other liquid crystal layers.

12. The liquid crystal display according to claim 9, wherein the liquid crystal layers each consist of a liquid crystal composition comprising a pleochroic dye and are designed such that when an electric field is applied, the direction of the axis of absorption of the dye molecules in one of the layers is substantially in agreement with the direction of the axis of absorption of the dye molecules in anyone of the other liquid crystal layers in the first state and crosses the latter substantially at right angles in the second state.

13. The liquid crystal display according to one of claims 1 to 12, wherein at least one of the substrates is provided with the color polarizer (14).

14. The liquid crystal display according to claim 13, wherein the color polarizer (14) is formed of a polarizer and a color filter.

15. The liquid crystal display according to claim 13 or 14, wherein the absorption spectrum of the pleochroic ferroelectric liquid crystal composition overlaps with the absorption spectrum of the color polarizer in the visible range.

16. The liquid crystal display according to one of claims 13 to 15, wherein the other substrate opposing the substrate provided with the color polarizer is provided with a color polarizer, a polarizer, or a color filter.

17. The liquid crystal display according to claim 16, wherein the color polarizers of both substrates exhibit the same hue.

18. The liquid crystal display according to one of claims 1 to 17, wherein when an electric field of one polarity is applied, the direction of the liquid crystal molecules is substantially the same as the direction of the axis of polarization of the color polarizer or the polarizer.

19. The liquid crystal display according to one of claims 1 to 18, wherin the pleochroic ferroelectric liquid crystal composition comprises 2 to 6% by mass of pleochroic dye.

**Patentansprüche**

1. Flüssigkristallanzeigevorrichtung mit einer Flüssigkristallschicht, einer Mehrzahl von Substraten, die zur beidseitigen Bedeckung der Flüssigkristallschicht angeordnet sind, von denen wenigstens eines mit einem Polarisator versehen ist und von denen wenigstens eines transparent ist, an den Substraten vorgesehenen Elektrofeldanlegungsmitteln zum Anlegen eines elektrischen Feldes an die Flüssigkristallschicht und einem zwischen den Substraten derart vorgesehenen Abdichtbauteil, um den Umfang der Flüssigkristallschicht einzufassen, wobei die Flüssigkristallschicht (1) einen ferroelektrischen Flüssigkristall aufweist, die Dicke der Flüssigkristallschicht (1) derart ist, daß die Moleküle des ferroelektrischen Flüssigkristalls Wendeln bilden können, und die Wendelachsen des ferroelektrischen Flüssigkristalls im wesentlichen parallel zu jedem der Substrate (2) ausgerichtet sind, dadurch gekennzeichnet, daß die Flüssigkristallschicht aus einer Flüssigkristallzusammensetzung besteht, die den ferroelektrischen Flüssigkristall als ein Wirtmaterial und einem pleochroitischen Farbstoff als eine Gastmaterial aufweist, daß die Oberfläche der Substrate so behandelt werden, daß die Wendelachsen des ferroelektrischen Flüssigkristalls über den ganzen Anzeigebereich in einer vorbestimmten Richtung ausgerichtet werden, daß das elektrische Feld ein umpolbares Gleichstromfeld ist und daß der wenigstens eine Polarisator ein neutraler Polarisator (8) oder ein Farbpolarisator (14) ist.

2. Flüssigkristallanzeigevorrichtung nach Anspruch 1, worin die Ausrichtung der Wendelachsen des Flüssigkristallmaterials durch einen Ausrichtungssteuerungsfilm (4) erfolgt.

3. Flüssigkristallanzeigevorrichtung nach Anspruch 2, worin der Ausrichtungssteuerungsfilm (4) ein aus einem Polyimidtyp-Polymermaterial hergestellter Film ist.

4. Flüssigkristallanzeigevorrichtung nach einem der Ansprüche 1 bis 3, worin der Winkel zwischen der Wendelachse des ferroelektrischen Flüssigkristalls und der Richtung der Polarisationsachse des neutralen Polarisators (8) oder des Farbpolarisators (14) im wesentlichen gleich dem Winkel zwischen der Richtung der langen Achse der Moleküle des ferroelektrischen Flüssigkristalls und der Richtung der Wendelachse ist.

5. Flüssigkristallanzeigevorrichtung nach einem der Ansprüche 1 bis 4, worin die Flussigkristallschicht eine Dicke von 4 bis 20 µm hat.

6. Flüssigkristallanzeigevorrichtung nach einem der Ansprüche 1 bis 5, worin die Elektrofeldanlegungsmittel Elektroden sind, deren jede aus einer Elektrodenschicht zum Anregen der Flüssigkristallschicht (1) als ganzer und einer Elektrodenschicht zum Anregen nur eines vorbestimmten Teils derselben besteht.

7. Flüssigkristallanzeigevorrichtung nach Anspruch 6, worin eine Isolierfilm (41) zwischen der die Flüssigkristallschicht (1) als ganze anregenden Elektrodenschicht und der nur einen vorbestimmten Teil der Flüssigkristallschicht (1) anregenden Elektrodenschicht eingefüht ist.

8. Flüssigkristallanzeigevorrichtung nach einem der Ansprüche 1 bis 7, woring wenigstens zwei Flüssigkristallschichten zwischen den transparenten Substraten eingefüht sind.

9. Flüssigkristallanzeigevorrichtung nach Anspruch 8, worin der Winkel zwischen der Richtung der langen Achse der Moleküle (10) des ferroelektrischen Flüssigkristalls und der Wendelachse von ±20° bis ±30° ist.

10. Flüssigkristallanzeigevorrichtung nach Anspruch 9, worin die Flüssigkristallschichten so ausgelegt sind, daß, wenn ein elektrisches Feld angelegt wird, die Richtung der langen Achse der Flüssigkristallmoleküle in einer der Schichten im wesentlichen senkrecht zur Richtung der langen Achse der Flüssigkristallmoleküle irgendeiner der anderer Flüssigkristallschichten ist.

11. Flüssigkristallanzeigevorrichtung nach Anspruch 9, worin die Flüssigkristallschichten so ausgelegt sind, daß, wenn ein elektrisches Feld angelegt wird, die Richtung der langen Achse der Flüssigkristallmoleküle in einer der Schichten einen Winkel von im wesentlichen 0° oder im wesentlichen 180° mit der Richtung der langen Achse der Flüssigkristallmoleküle in irgendeiner der anderen Flüssigkristallschichten bildet.

12. Flüssigkristallanzeigevorrichtung nach Anspruch 9, worin die Flüssigkristallschichten jeweils aus einer Flüssigkristallzusammensetzung, die eine pleochroitischen Farbstoff aufweist, bestehen und so ausgelegt sind, daß, wenn ein elektrisches Feld angelegt wird, die Richtung der Achse der Absorption der Farbstoffmoleküle in einer der Schichten im ersten Zustand im wesentlichen im Einklang mit der Richtung der Achse der Absorption der Farbstoffmoleküle in irgendeiner der anderer Flüssigkristallschichten ist und die letztere im zweiten Zustand im wesentlichen in rechten Winkeln kreuzt.

13. Flüssigkristallanzeigevorrichtung nach einem der Ansprüche 1 bis 12, worin wenigstens eines der Substrate mit dem Farbpolarisator (14) versehen ist.

14. Flüssigkristallanzeigevorrichtung nach Anspruch 13, worin der Farbpolarisator (14) aus einem Polarisator und einem Farbfilter gebildet ist.

15. Flüssigkristallanzeigevorrichtung nach Anspruch 13 oder 14, worin das Absorptionsspektrum der pleochroitischferroelektrischen Flüssigkristallzusammensetzung das Absorptionsspektrum des Farbpolarisators im sichtbaren Bereich überlappt.

16. Flüssigkristallanzeigevorrichtung nach einem der Ansprüche 13 bis 15, worin das andere, dem mit dem Farbpolarisator versehenen Substrat gegenüberliegende Substrat mit einem Farbpolarisator, einem Polarisator oder einem Farbfilter versehen ist.

17. Flüssigkristallanzeigevorrichtung nach Anspruch 16, worin die Farbpolarisation beider Substrate den gleichen Farbton aufweisen.

18. Flüssigkristallanzeigevorrichtung nach einem der Ansprüche 1 bis 17, worin, wenn ein elektrisches Feld einer Polarität angelegt wird, die Richtung der Flüssigkristallmoleküle im wesentlichen die gleiche wie die Richtung der Polarisationsachse des Farbpolarisators oder des Polarisators ist.

19. Flüssigkristallanzeigevorrichtung nach einem der Ansprüche 1 bis 18, worin die pleochroitischferroelektrischen Flüssigkristallzusammensetzung 2 bis 6 Gew.% des pleochroitischen Farbstoffs aufweist.

**Revendications**

1. Dispositif d'affichage à cristal liquide incluant une couche de cristal liquide, une pluralité de substrats disposés de manière à enserrer entre eux la couche de cristal liquide et dont l'un au moins comporte un polariseur et dont l'un au moins est transparent, des moyens d'application d'un champ électrique prévus sur les substrats pour appliquer un champ électrique à la couche de cristal liquide et un élément d'étanchéité prévu entre les substrats de manière à envelopper la périphérie de la couche de cristal liquide, la couche de cristal liquide (1) comprenant un cristal liquide ferroélectrique, l'épaisseur de la couche de cristal liquide (1) étant telle que les molécules du cristal liquide ferroélectrique peuvent former des hélices, les axes des hélices du cristal liquide ferroélectrique étant orientés sensiblement parallèlement à chacun des substrats (2), caractérisé en ce que la couche de cristal liquide est constituée par une composition de cristal liquide comprenant le cristal liquide ferroélectrique en tant que matériau récepteur et un colorant pléochroïque en tant que matériau hôte, que les surfaces des substrats sont traitées de manière que les axes des hélices du cristal liquide ferroélectrique sont orientés dans une direction prédéterminée dans l'ensemble de la zone d'affichage, que le champ électrique est un champ continu réversible et que ledit au moins un polariseur est un polariseur neutre (8) ou un polariseur coloré (14).

2. Dispositif d'affichage à cristal liquide selon la revendication 1, dans lequel l'orientation des axes des hélices du matériau formé du cristal liquide est obtenue au moyen d'une pellicule (4) de commande de l'orientation.

3. Dispositif d'affichage à cristal liquide selon la revendication 2, dans lequel la pellicule (4) de commande de l'orientation est une pellicule formée d'un matériau polymérique du type polyimide.

4. Dispositif d'affichage à cristal liquide selon l'une des revendications 1 à 3, dans lequel l'angle entre la direction de l'axe d'hélice du cristal liquide ferroélectrique et la direction de l'axe de polarisation du polariseur neutre (8) ou du polariseur coloré (14) est sensiblement égale à l'angle entre la direction du grand axe des molécules du cristal liquide ferroélectrique et la direction de l'axe de l'hélice.

5. Dispositif d'affichage à cristal liquide selon l'une des revendications 1 à 4, dans lequel la couche de cristal liquide possède une épaisseur comprise entre 4 et 20 µm.

6. Dispositif d'affichage à cristal liquide selon l'une des revendications 1 à 5, dans lequel les moyens d'application du champ électrique sont des électrodes, dont chacune est constituée par une couche formant électrode servant à exciter la couche de cristal liquide (1) dans son ensemble, et une couche formant électrode servant à exciter seulement une partie prédéterminée de la couche de cristal liquide.

7. Dispositif d'affichage à cristal liquide selon la revendication 6, dans lequel une pellicule isolante (41) est intercalée entre la couche formant électrode excitant la couche de cristal liquide (1) dans son ensemble et la coche formant électrode excitant uniquement une partie prédéterminée de la couche de cristal liquide (1).

8. Dispositif d'affichage à cristal liquide selon l'une des revendications 1 à 7, dans lequel au moins deux couches de cristal liquide sont intercalées entre les substrats transparents.

9. Dispositif d'affichage à cristal liquide selon la revendication 8, dans lequel l'angle entre la direction du grand axe des molécules (10) du cristal liquide ferroélectrique et l'axe de l'hélice est compris entre ±20° et ±30°.

10. Dispositif d'affichage à cristal liquide selon la revendication 9, dans lequel les couches de cristal liquide sont agencées de telle sorte que, lors de l'application d'un champ électrique, la direction du grand axe des mòlecules de cristal liquide dans l'une des couches est sensiblement perpendiculaire à la direction du grand axe des molécules du cristal liquide dans l'une quelconque des autres couches de cristal liquide.

11. Dispositif d'affichage à cristal liquide selon la revendication 9, dans lequel les couches de cristal liquide sont agencées de telle sorte que, lors de l'application d'un champ électrique, la direction du grand axe des molécules de cristal liquide dans l'une des couches fait un angle égal sensiblement à 0° ou sensiblement à 180° avec la direction du grand axe des molécules de cristal liquide, dans l'une quelconque des autres couches du cristal liquide.

12. Dispositif d'affichage à cristal liquide selon la revendication 9, dans lequel les couches de cristal liquide sont constituées chacune par une composition du cristal liquide comprenant un colorant pléochroïque et sont agencées de telle sorte que, lorsqu'un champ électrique est appliqué, la direction de l'axe d'absorption des molécules de colorant dans l'une des couches concorde sensiblement avec la direction de l'axe d'absorption des molécules de colorant dans l'une quelconque des autres couches du cristal liquide, dans le premier état, et recoupe cette dernière direction sensiblement à angle droit, dans le second état.

13. Dispositif d'affichage à cristal liquide selon l'une des revendications 1 à 12, dans lequel au moins l'un des substrats est équipé du polariseur coloré (14).

14. Dispositif d'affichage à cristal liquide selon la revendication 13, dans lequel le polariseur coloré (14) est formé d'un polariseur et d'un filtre coloré.

15. Dispositif d'affichage à cristal liquide selon la revendication 13 ou 14, dans lequel le spectre d'absorption de la composition de cristal liquide ferroélectrique pléochroïque chevauche le spectre d'absorption du polariseur coloré dans la gamme du spectre visible.

16. Dispositif d'affichage à cristal liquide selon l'une des revendications 13 à 15, dans lequel l'autre substrat situé en vis-à-vis du substrat équipé du polariseur coloré est équipé d'un polariseur coloré, d'un polariseur ou d'un filtre coloré.

17. Dispositif d'affichage à cristal liquide selon la revendication 16, dans lequel les polariseurs colorés des deux substrats possèdent la même teinte.

18. Dispositif d'affichage à cristal liquide selon l'une des revendication 1 à 17, dans lequel, lors de l'application d'un champ électrique possédant une polarité, la direction des molécules du cristal liquide est sensiblement identique à la direction de l'axe de polarisation du polariseur coloré ou du polariseur.

19. Dispositif d'affichage à cristal liquide selon l'une des revendications 1 à 18, dans lequel la composition de cristal liquide ferroélectrique pléochroïque comprend 2 à 6% en masse d'un colorant pléochroïque.

FIG. 1

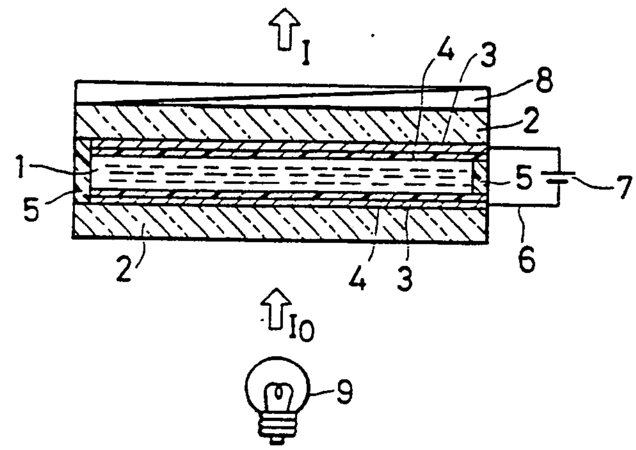


FIG. 2

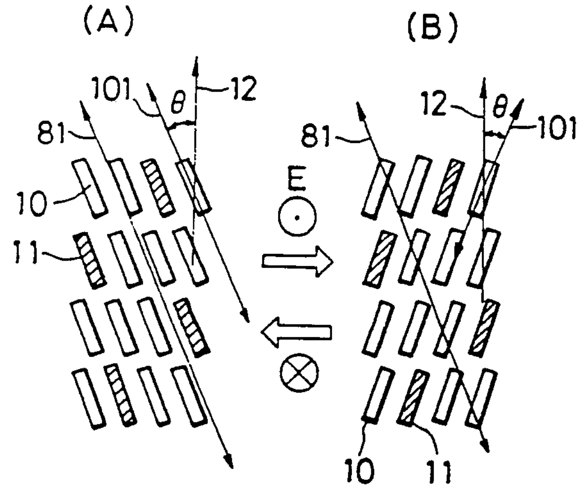


FIG. 3

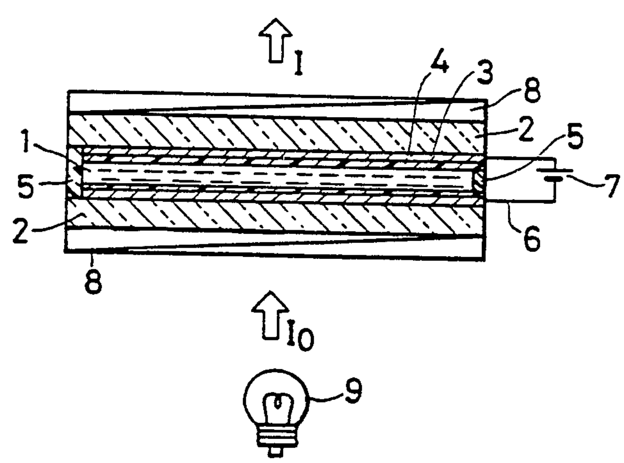

FIG. 4

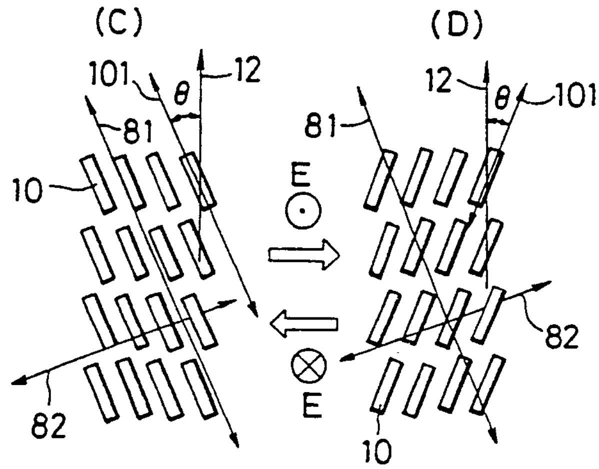
(C)
(D)
101
12
θ
81
10
82
E
E
12
θ
101
81
82
10

FIG. 5

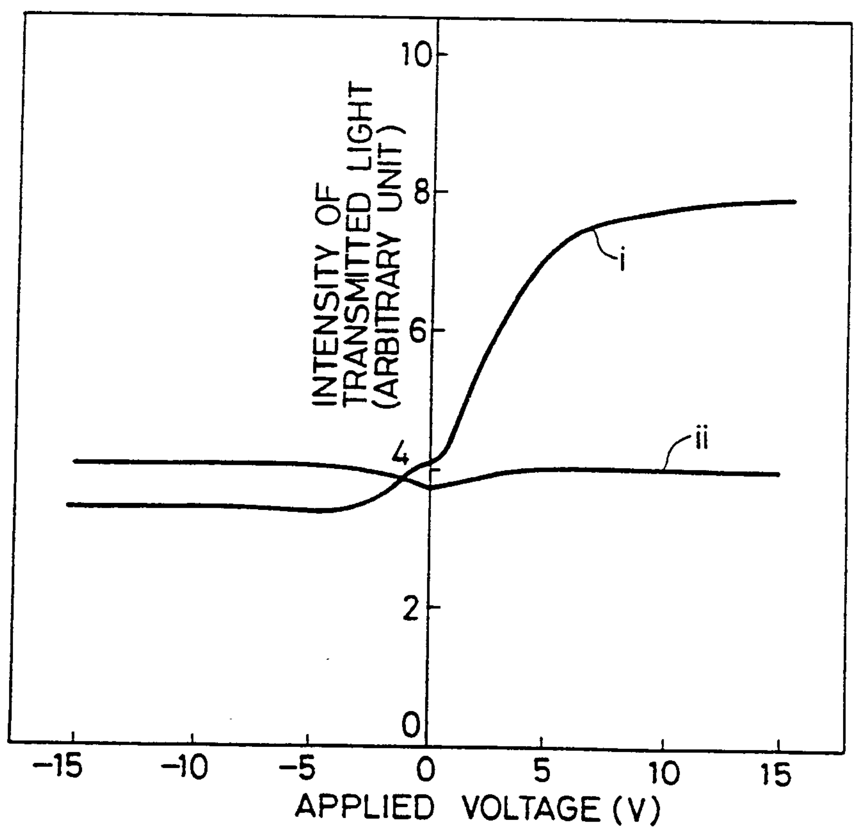
INTENSITY OF TRANSMITTED LIGHT (ARBITRARY UNIT)
10
8
6
4
2
0
i
ii
−15
−10
−5
0
5
10
15
APPLIED VOLTAGE (V)

FIG. 6

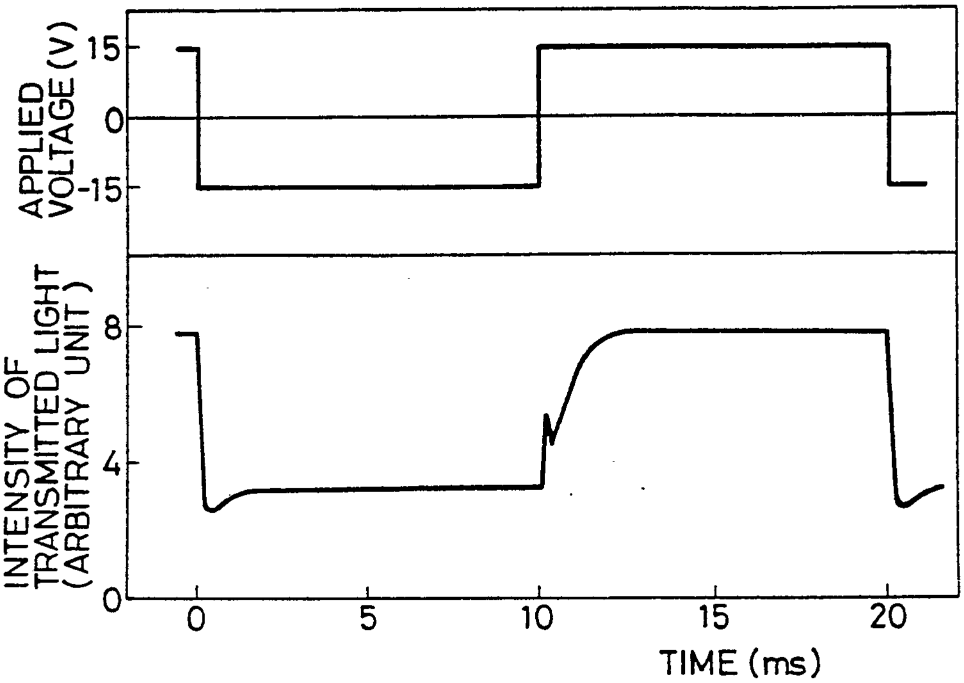


FIG. 7

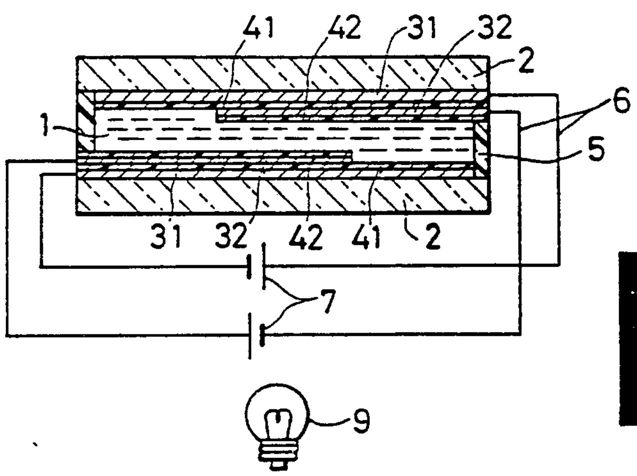


FIG. 8

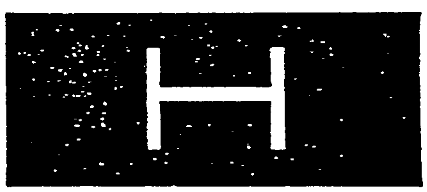


FIG. 9

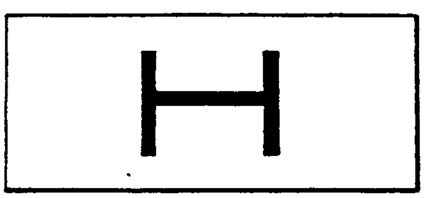

FIG. 10

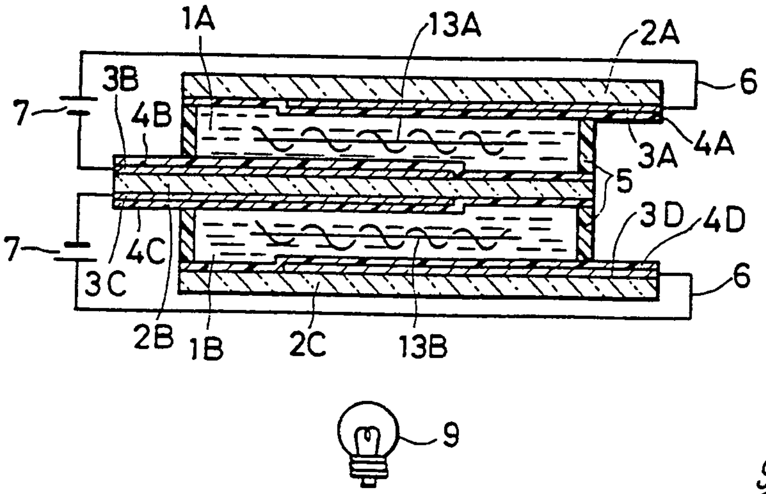


FIG. 11

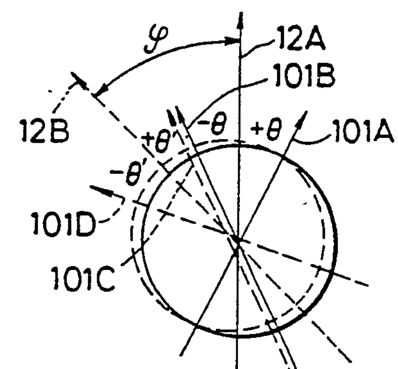


FIG. 12

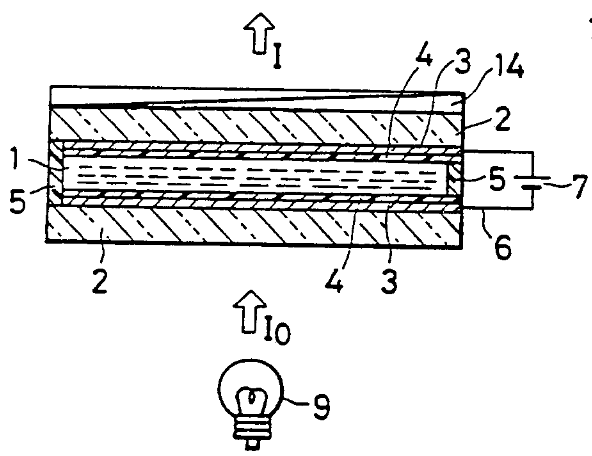


FIG. 13

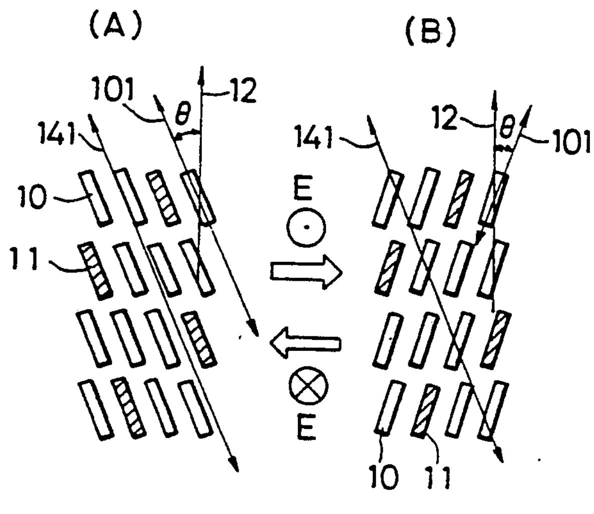

FIG. 14(a)

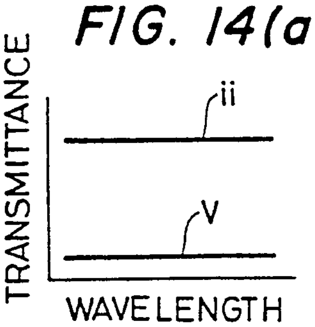


FIG. 14(b)

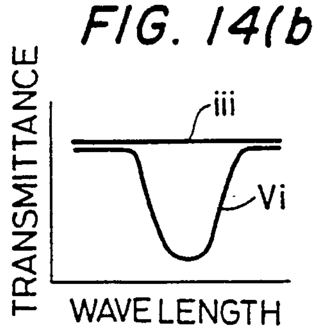


FIG. 14(c)

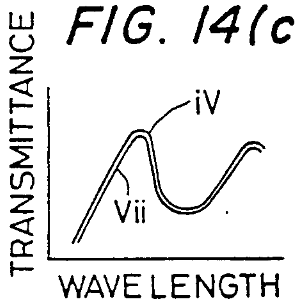


FIG. 15

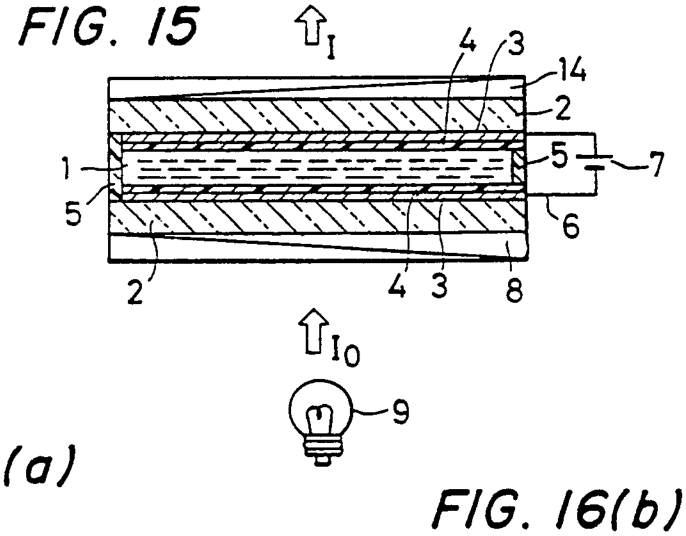


FIG. 16(a)

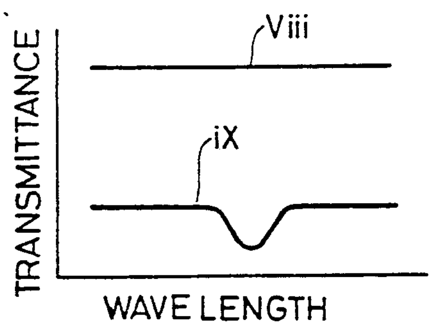


FIG. 16(b)

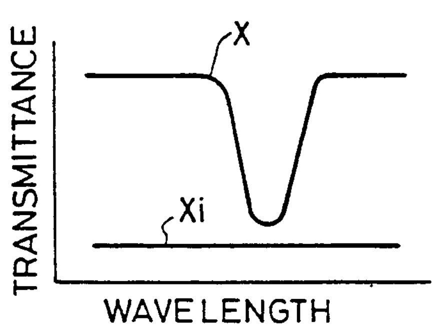

FIG. 17

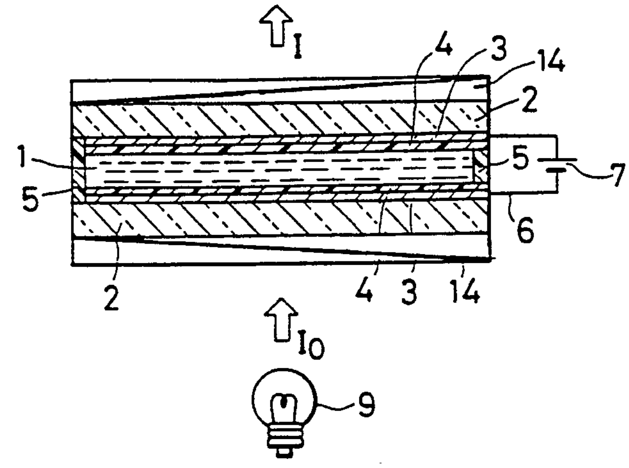


FIG. 18(a)

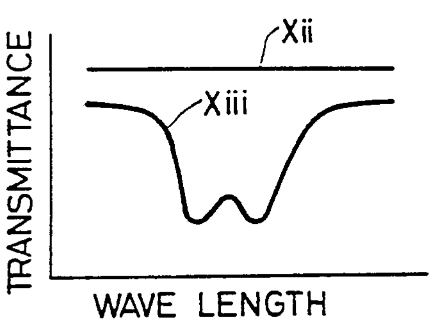


FIG. 18(b)

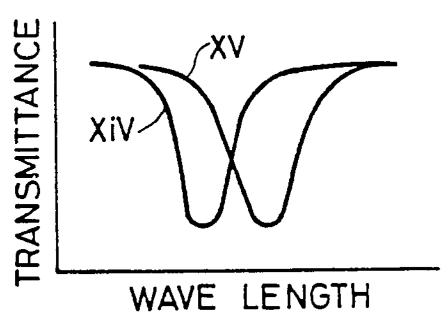


FIG. 19

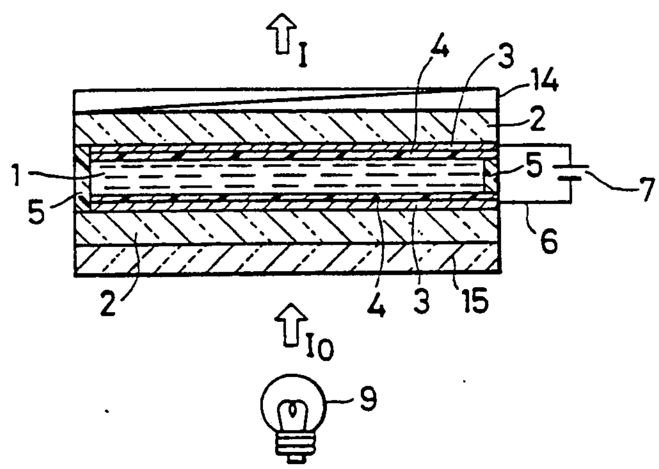

FIG. 20

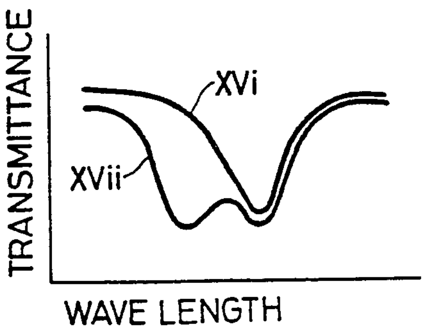


FIG. 21

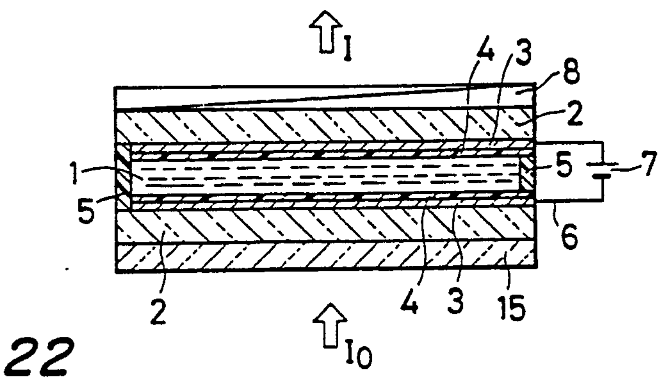


FIG. 22

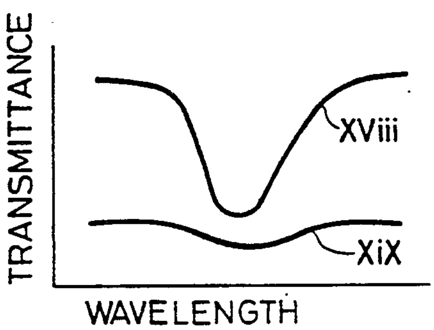


FIG. 23(a)

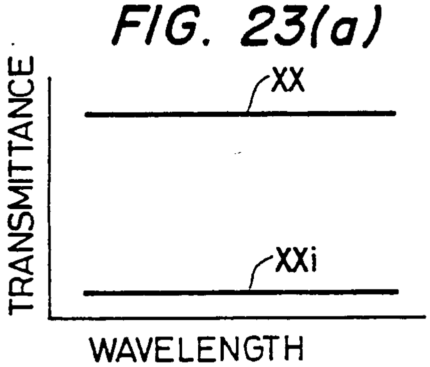


FIG. 23(b)

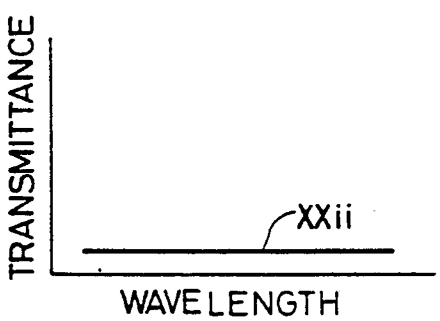


FIG. 24